# FASCICULE DE BREVET EUROPEEN

(11) **EP 2 174 812 B1**
(45) Date de publication et mention de la délivrance du brevet: **07.05.2014**
(21) Numéro de dépôt: 09171436.0
(22) Date de dépôt: 28.09.2009
(51) Int. Cl.: B60J 5/04, E05B 77/04

(54) **Dispositif d'ouverture sécurisé d'un ouvrant de véhicule**
Sichere Öffnungsvorrichtung für eine Fahrzeugtür
Secure opening device for a vehicle wing

(30) Priorité: 08.10.2008 FR 0856806
(43) Date de publication de la demande: 14.04.2010
(73) Titulaire: Peugeot Citroën Automobiles SA, 78140 Vélizy-Villacoublay (FR)
(72) Inventeur: Bouquin, Grégory, 25200, Montbeliard (FR)
(74) Mandataire: Allain, Laurent

(56) Documents cités:
- DE-A1- 10 016 243
- FR-A- 2 817 583
- US-A- 5 752 346
- US-A1- 2007 029 835

## Description

Le domaine technique de l'invention concerne les dispositifs d'ouverture sécurisés d'ouvrants de véhicules, visant à neutraliser les poignées d'ouverture desdits ouvrants, en cas de choc sur ceux-ci, de manière à éviter leur ouverture intempestive pouvant conduire à des dommages accrus sur les passagers et sur l'environnement. Les dispositifs d'ouverture selon l'invention, sont particulièrement adaptés aux portes arrière latérales de véhicules automobiles.

Les dispositifs d'ouverture d'un ouvrant de véhicule automobile à sécurité renforcée existent et ont déjà fait l'objet de brevet. On peut, par exemple, citer le brevet FR2869937, qui se rapporte à un dispositif d'ouverture d'ouvrant sécurisé, pour permettre, en cas de choc, d'éviter à la porte de s'ouvrir. En effet, les différents éléments constituant le dispositif d'ouverture présentent des formes et des rigidités différentes, et, en cas de choc sur l'ouvrant, subissent des déformations plus ou moins marquées. Cette réaction hétérogène entraîne des phénomènes d'accélération et de décélération décalés dans le temps, pouvant conduire à un déverrouillage du dispositif, et donc à l'ouverture non souhaitée de l'ouvrant. Pour éviter cet événement redouté, les dispositifs d'ouverture décrits dans ce brevet, présentent un organe mécanique de blocage, verrouillant étroitement le mécanisme d'ouverture de l'ouvrant.

Le document FR 2 817 583 se rapporte aussi à un dispositif d'ouverture pour éviter à la porte de s'ouvrir en cas de choc.

Les dispositifs d'ouverture d'ouvrant de véhicule selon l'invention, sont conçus pour éviter un coincement intempestif du câble reliant un organe de commande extérieur à la serrure, lors d'un choc sur l'ouvrant, et ainsi empêcher ledit ouvrant de s'ouvrir lors dudit choc. En effet, cet organe de commande extérieur, qui peut être assimilé à une poignée, est relié à la serrure de l'ouvrant au moyen d'un câble, de sorte que l'actionnement de la poignée engendre la tension du câble, qui exerce alors un effort de traction au niveau de ladite serrure, déclenchant son mécanisme de déverrouillage. La partie du câble située entre la poignée et la serrure est non protégée, et peut donc se coincer entre la peau extérieure de l'ouvrant, qui s'est déplacée sous l'effet du choc, et une pièce servant de support à la serrure sur l'ouvrant. Ce coincement circonstanciel, peut provoquer une traction du câble, et peut donc entrainer le déverrouillage de la serrure. Les dispositifs d'ouverture selon l'invention, sont dotés d'un organe de protection prévu pour empêcher le coincement de ce câble, et ainsi éviter une ouverture inopinée de l'ouvrant durant le choc.

La présente invention a pour objet un dispositif d'ouverture d'un ouvrant de véhicule, comprenant un élément de commande d'ouverture extérieure, un câble et une serrure, ces trois éléments étant solidaires de l'ouvrant, et ledit ouvrant comportant une peau extérieure. La principale caractéristique d'un dispositif selon l'invention, est qu'une butée est interposée entre la peau et le câble, de manière à stopper le déplacement de la peau en amont du câble, lors d'un choc sur l'ouvrant. La notion d' « amont », doit être interprétée par rapport au sens de propagation du choc dans le véhicule. En effet, suite à un impact externe accidentel, il est fréquent que la peau extérieure de l'ouvrant ainsi percuté, migre vers l'intérieur du véhicule, puis pince le câble d'actionnement de la serrure, en exerçant sur ce dernier un effort de traction. La serrure se retrouve involontairement déverrouillée, provoquant l'ouverture inopinée de l'ouvrant. La butée a pour objectif de stopper la course de la peau, avant qu'elle ne pince le câble. De façon préférentielle, cette butée est solide et rigide, et ne se déforme pas sous l'effet de l'impact de la peau de l'ouvrant. L'élément de commande d'ouverture extérieure peut être assimilé à une poignée de porte traditionnelle.

Avantageusement, la butée est solidaire de l'ouvrant. Ce mode de réalisation, est le plus simple à mettre en oeuvre, car il ne nécessite aucune intervention sur la structure du véhicule, pour implanter cette butée. Le terme « solidaire » signifie que la butée est fixée étroitement à l'ouvrant, de manière directe, ou indirecte au moyen d'une pièce tampon.

Préférentiellement, la serrure est implantée sur l'ouvrant au moyen d'une pièce support fixée à l'ouvrant, et la butée est solidaire de ladite pièce support.

De façon avantageuse, la butée et la pièce support sont monobloc. De cette manière, l'opération de fabrication de la butée est confondue avec celle de la fabrication de la pièce support, simplifiant, de façon évidente, le processus de mise en oeuvre de cette butée. Les pièces support ont donc une double fonction, d'une part, de support de la serrure sur l'ouvrant, et, d'autre part, de butée pour la peau en cas de choc accidentel.

De façon préférentielle, l'ouvrant est constitué par une porte latérale arrière d'un véhicule automobile. Les dispositifs selon l'invention sont, en effet, particulièrement adaptés aux véhicules automobiles dotés de portes arrières latérales. De façon préférentielle, la porte arrière est battante.

Avantageusement, le câble reliant la poignée à la serrure, est contenu dans un plan sensiblement vertical, et la butée s'étend vers la peau, selon une direction sensiblement perpendiculaire à ladite peau.

Selon un mode de réalisation préféré de l'invention, la peau extérieure définit un plan vertical, orienté selon une direction longitudinale du véhicule, et la butée s'étend selon une direction transversale dudit véhicule. En effet, le choc se produisant sur une porte latérale de véhicule, le déplacement de la peau s'effectuera selon une direction transversale du véhicule. Pour être efficace, la butée doit s'étendre de manière à ce que le câble se retrouve en retrait de ladite butée, par rapport à la peau extérieure de l'ouvrant.

Préférentiellement, la butée est plane et de faible épaisseur, et prolonge la pièce support vers la peau, et ladite butée possède un rebord sensiblement parallèle aux deux plans, et qui est interposé entre la peau et le câble. Ainsi, la butée, en étant de faible épaisseur, est d'un encombrement minimum. Le rebord, de par son agencement dans l'espace, joue le rôle d'un carter de protection pour le câble d'actionnement de la serrure, vis-à-vis d'un déplacement potentiel de la peau de l'ouvrant.

L'invention se rapporte également à un ouvrant possédant un dispositif sécurisé selon l'invention.

l'invention couvre aussi un véhicule comprenant au moins un ouvrant selon l'invention.

Les dispositifs sécurisés selon l'invention, présentent l'avantage d'être de géométrie simple, et donc d'être faciles à usiner. Ils permettent de remplir une fonction sécuritaire de premier plan, qui est celle d'empêcher l'ouverture inopinée d'un ouvrant en cas de choc sur ledit ouvrant, et ce, en demeurant d'un encombrement réduit. La conjonction des deux avantages précédents, fait que ces dispositifs sont fiables, car ils sont conçus pour ne jamais entraver le mécanisme d'ouverture de l'ouvrant, en situation de vie normale.

On donne ci-après une description détaillée d'un mode de réalisation préféré d'un dispositif d'ouverture sécurisé selon l'invention, en se référant aux figures 1 à 4.
- La figure 1 est une vue schématisée partielle, d'une partie latérale de structure de véhicule automobile, permettant de localiser le dispositif selon l'invention.
- la figure 2 est une vue de face d'une pièce de support de serrure, connue de l'état de la technique.
- la figure 3 est une vue de face d'une pièce de support de serrure, mise en oeuvre dans un dispositif selon l'invention.
- La figure 4 est une vue agrandie de la zone arrondie, en pointillés, de la figure 1, matérialisant un dispositif d'ouverture selon l'invention.

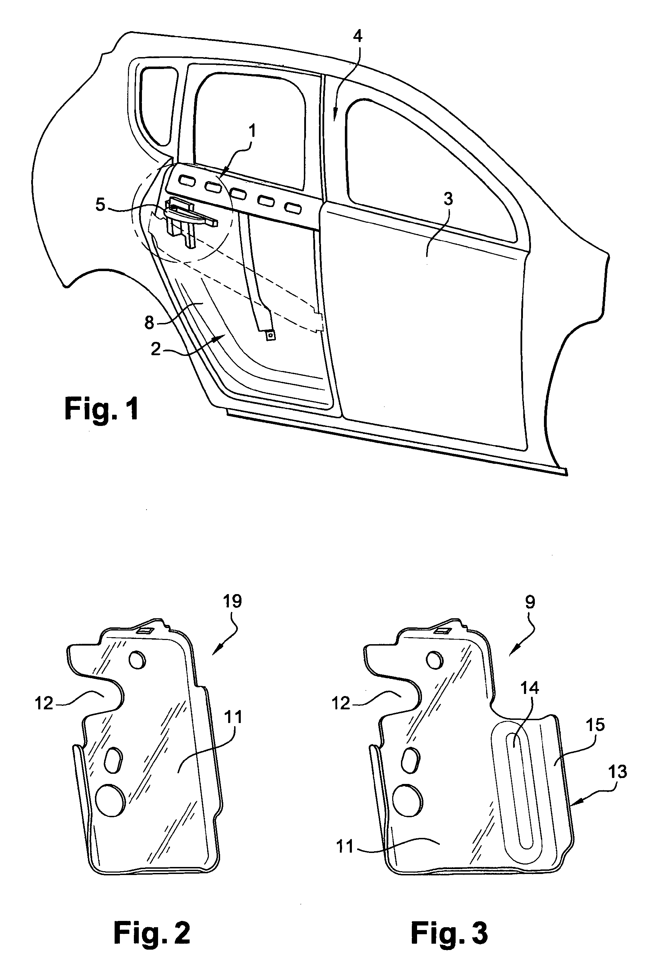

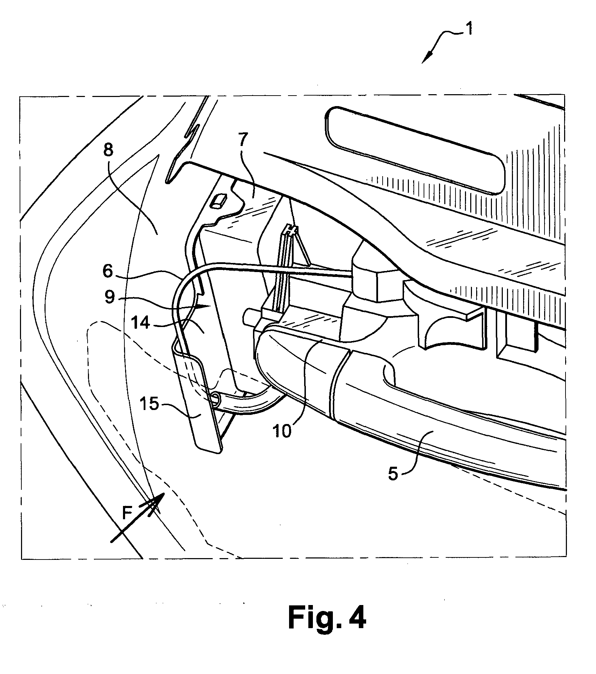

Il est à préciser, que les pièces de support montrées aux figures 2 et 3, correspondent à un coté du véhicule, et que les vues présentées aux figures 1 et 4 correspondent à l'autre coté.

En se référant à la figure 1, un dispositif d'ouverture sécurisé 1 selon l'invention, est particulièrement adapté aux véhicules automobiles, dotés de portes arrières 2 latérales. Sur un véhicule automobile, il est implicite que chaque porte latérale 2 comporte une peau extérieure 3 en tôle, délimitant latéralement ledit véhicule. Afin de bien comprendre l'invention ainsi que les figures qui l'illustrent, cette peau extérieure 3 n'est pas montrée sur la porte arrière 2, pour permettre de bien visualiser le dispositif 1 selon l'invention. Le positionnement réel de cette peau 3, par rapport à ce dispositif 1 selon l'invention, est clairement défini au paragraphe suivant, consacré à la description de la figure 4. Néanmoins, on peut imaginer que cette peau 3 prolongerait celle de la porte avant 4, représentée à la figure 1, et recouvrirait la porte arrière 2 en masquant le dispositif sécurisé 1.

En se référant à la figure 4, un dispositif d'ouverture 1 sécurisé d'une porte arrière 2 de véhicule selon l'invention, comprend un élément de commande 5 d'ouverture extérieure, ou poignée, un câble 6 et une serrure 7, ces trois éléments 5,6,7 étant solidaires de la porte arrière 2. Plus précisément, la porte arrière 2 peut être schématiquement délimitée par une peau extérieure 3, une doublure intérieure, ces deux éléments étant inscrits dans deux plans verticaux et sensiblement parallèles, orientés sensiblement selon une direction longitudinale du véhicule. Ces deux plans sont reliés entre eux, au niveau de leur périphérie, par un rebord 8 s'étendant selon une direction transversale du véhicule automobile. La serrure 7 est implantée sur la porte arrière 2, au niveau de la face interne du rebord 8 reliant la peau extérieure à la doublure, au moyen d'une pièce support 9 plane et de faible épaisseur. La poignée 5 est matérialisée par un levier, apte à se déplacer dans un plan sensiblement horizontal, ladite poignée 5 étant conçue pour déverrouiller la serrure 7 par l'intermédiaire du câble 6. La partie du câble 6 reliant la commande d'ouverture extérieure 5 à la serrure 7, est à l'air libre, sans protection particulière, et peut donc subir tout type d'endommagement de la part d'une pièce constitutive de la porte 2, et en particulier de la part de la peau extérieure 3, en cas de choc accidentel. Cette partie de câble 6 est contenue dans un plan sensiblement vertical. Au niveau de la figure 4, ladite peau extérieure 3 n'est pas représentée, pour éviter de masquer le dispositif sécurisé selon l'invention. Si elle était présente sur cette figure, elle serait matérialisée par un plan sensiblement vertical, passant par la surface de contact référencée avec l'indice 10.

En se référant à la figure 2, une pièce support 19 de serrure 7 traditionnelle, connue de l'état de la technique, possède une face rectangulaire 11 ajourée, ayant un contour relativement régulier, à l'exception d'une encoche évasée 12 prévue pour arrimer cette pièce 9 sur la porte 2 du véhicule.

En se référant à la figure 3, une pièce de support 9 de serrure 7 mise en oeuvre dans un dispositif de sécurité selon l'invention, présente une excroissance 13 en forme de L. En effet, cette excroissance 13 présente une partie plane 14 de forme sensiblement rectangulaire, prolongeant le plan de surface 11 de la pièce support 9, cette partie plane 14 se terminant par un rebord 15 plan, qui lui est perpendiculaire. La pièce support 9, et l'excroissance 13 forment un ensemble monobloc.

En se référant à la figure 4, la pièce support 9 est positionnée sur la face interne du rebord 8 de la porte 2, reliant la peau extérieure 3 à la doublure intérieure de porte 2, de sorte que son excroissance 13 s'étende vers l'extérieur du véhicule, autrement dit vers la peau extérieure 3 de la porte 2, et de sorte que le rebord plan 15, de la pièce support 9, soit interposé entre le plan vertical dans lequel est contenu le câble 6, et la peau extérieure 3. Ce rebord plan 15 est assimilable à un carter de protection pour le câble 6, vis-à-vis de la peau extérieure 3.

Ainsi, une porte latérale 2 de véhicule automobile subissant un choc latéral suivant la direction F, va se déformer en déplaçant sa peau extérieure 3 vers l'intérieur du véhicule. Cette peau 3 va se déplacer jusqu'à venir en contact du rebord 15 de la pièce support 9, qui va alors jouer le rôle d'une butée d'arrêt. Le câble 6 n'étant pas impacté par ladite peau extérieure 3, se retrouve préservé, sans risque de déverrouiller accidentellement la serrure 7.

## Revendications

1. Dispositif d'ouverture (1) d'un ouvrant (2) de véhicule, comprenant un élément de commande (5) d'ouverture extérieure, un câble (6) et une serrure (7), ces trois éléments (5,6,7) étant solidaires de l'ouvrant (2), et ledit ouvrant (2) comportant une peau extérieure (3), **caractérisé en ce qu'** une butée (13) est interposée entre la peau (3) et le câble (6), de manière à stopper le déplacement de la peau (3) en amont du câble (6), lors d'un choc sur l'ouvrant (2).

2. Dispositif selon la revendication 1, **caractérisé en ce que** la butée (13) est solidaire de l'ouvrant (2).

3. Dispositif selon la revendication 2, **caractérisé en ce que** la serrure (7) est implantée sur l'ouvrant (2) au moyen d'une pièce support (9) fixée à l'ouvrant (2), et **en ce que** la butée (13) est solidaire de ladite pièce support (9).

4. Dispositif selon la revendication 3, **caractérisé en ce que** la butée (13) et la pièce support (13) sont monobloc.

5. Dispositif selon l'une quelconque des revendications précédentes, **caractérisé en ce que** l'ouvrant est constitué par une porte latérale arrière (2) d'un véhicule automobile.

6. Dispositif selon la revendication 5, **caractérisé en ce que** le câble (6) reliant la poignée (5) à la serrure (7), est contenu dans un plan sensiblement vertical, et **en ce que** la butée (13) s'étend vers la peau (3), selon une direction sensiblement perpendiculaire à ladite peau (3).

7. Dispositif selon la revendication 6, **caractérisé en ce que** la peau extérieure (3) définit un plan vertical, orienté selon une direction longitudinale du véhicule, et **en ce que** la butée (13) s'étend selon une direction transversale dudit véhicule.

8. Dispositif selon la revendication 7, **caractérisé en ce que** la butée (13) est plane et de faible épaisseur, et prolonge la pièce support (9) vers la peau (3), et **en ce qu'**elle possède un rebord (15) sensiblement parallèle aux deux plans, et interposé entre la peau (3) et le câble (6).

9. Ouvrant (2) de véhicule, **caractérisé en ce qu'**il comporte un dispositif d'ouverture (1) selon l'une quelconque des revendications 1 à 8.

10. Véhicule automobile, caractérisé en qu'il comprend au moins un ouvrant (2) selon la revendication 9.

## Patentansprüche

1. Vorrichtung zum Öffnen (1) eines Türflügels (2) eines Fahrzeugs, umfassend ein Betätigungselement (5) zum Öffnen von außen, ein Kabel (6) und ein Türschloss (7), wobei diese drei Elemente (5, 6, 7) fest mit dem Türflügel (2) verbunden sind, und wobei der Türflügel (2) eine Außenhaut (3) umfasst, **dadurch gekennzeichnet, dass** ein Anschlag (13) zwischen der Haut (3) und dem Kabel (6) eingefügt ist, um die Verlagerung der Haut (3) vor das Kabel (6) bei einem Stoß gegen den Türflügel (2) aufzuhalten.

2. Vorrichtung nach Anspruch 1, **dadurch gekennzeichnet, dass** der Anschlag (13) fest mit dem Türflügel (2) verbunden ist.

3. Vorrichtung nach Anspruch 2, **dadurch gekennzeichnet, dass** das Türschloss (7) am Türflügel (2) mithilfe eines Halteteils (9), das am Türflügel (2) befestigt ist, angeordnet ist, und dadurch, dass der Anschlag (13) fest mit dem Halteteil (9) verbunden ist.

4. Vorrichtung nach Anspruch 3, **dadurch gekennzeichnet, dass** der Anschlag (13) und das Halteteil (13) einstückig sind.

5. Vorrichtung nach einem der vorhergehenden Ansprüche, **dadurch gekennzeichnet, dass** der Türflügel von einer hinteren Seitentür (2) eines Kraftfahrzeugs gebildet wird.

6. Vorrichtung nach Anspruch 5, **dadurch gekennzeichnet, dass** das Kabel (6), das den Griff (5) mit dem Türschloss (7) verbindet, in einer im Wesentlichen vertikalen Ebene enthalten ist, und dadurch, dass sich der Anschlag (13) zur Haut (3) gemäß einer Richtung erstreckt, die im Wesentlichen senkrecht zur Haut (3) verläuft.

7. Vorrichtung nach Anspruch 6, **dadurch gekennzeichnet, dass** die Außenhaut (3) eine vertikale Ebene definiert, die gemäß einer Längsrichtung des Fahrzeugs ausgerichtet ist, und dadurch, dass sich der Anschlag (13) gemäß einer quer verlaufenden Richtung des Fahrzeugs erstreckt.

8. Vorrichtung nach Anspruch 7, **dadurch gekennzeichnet, dass** der Anschlag (13) eben ist und eine geringe Dicke aufweist und das Halteteil (9) zur Haut (3) verlängert, und dadurch, dass er einen Rand (15) umfasst, der im Wesentlichen parallel zu den zwei Ebenen verläuft und zwischen der Haut (3) und dem Kabel (6) eingefügt ist.

9. Türflügel (2) eines Fahrzeugs, **dadurch gekennzeichnet, dass** er eine Vorrichtung zum Öffnen (1) nach einem der Ansprüche 1 bis 8 umfasst.

10. Kraftfahrzeug, **dadurch gekennzeichnet, dass** es wenigstens einen Türflügel (2) nach Anspruch 9 umfasst.

## Claims

1. An opening device (1) for a vehicle wing (2), comprising an external opening control element (5), a cable (6) and a lock (7), these three elements (5, 6, 7) being secured to the wing (2), and said wing (2) comprising an outer skin (3), **characterised in that** an abutment (13) is interposed between the skin (3) and the cable (6) so as to stop the movement of the skin (3) upstream of the cable (6) upon an impact on the wing (2).

2. A device according to claim 1, **characterised in that** the abutment (13) is secured to the wing (2).

3. A device according to claim 2, **characterised in that** the lock (7) is installed on the wing (2) by means of a support part (9) attached to the wing (2), and **in that** the abutment (13) is secured to said support port (9).

4. A device according to claim 3, **characterised in that** the abutment (13) and the support part (13) are integral.

5. A device according to any one of the previous claims, **characterised in that** the wing is comprised from a rear side door (2) of a motor vehicle.

6. A device according to claim 5, **characterised in that** the cable (6) connecting the handle (5) to the lock (7) is contained within a substantially vertical plane, and **in that** the abutment (13) extends towards the skin (3), in a direction substantially perpendicular to said skin (3).

7. A device according to claim 6, **characterised in that** the outer skin (3) defines a vertical plane, oriented in a longitudinal direction to the vehicle, and **in that** the abutment (13) extends in a transverse direction to said vehicle.

8. A device according to claim 7, **characterised in that** the abutment (13) is flat and thin, and extends from the support part (9) towards the skin (3), and **in that** it has an edge (15) substantially parallel to the two planes and interposed between the skin (3) and the cable (6).

9. A vehicle wing (2), **characterised in that** it comprises an opening device (1) according to any one of claims 1 to 8.

10. A motor vehicle, **characterised in that** it comprises at least one wing (2) according to claim 9.
